# EUROPEAN PATENT SPECIFICATION

(11) **EP 4 098 949 B1**
(45) Date of publication and mention of the grant of the patent: **27.11.2024**
(21) Application number: 22177268.4
(22) Date of filing: 03.06.2022
(51) Int. Cl.: F24D 13/02, E04F 13/074

(54) **METHOD FOR FORMING A CONSTRUCTION PANEL**
VERFAHREN ZUR HERSTELLUNG EINER BAUPLATTE
PROCÉDÉ DE FORMATION D'UN PANNEAU DE CONSTRUCTION

(30) Priority: 03.06.2021 BE 202105444
(43) Date of publication of application: 07.12.2022
(73) Proprietor: Ingedicon BV, 3680 Neeroeteren (BE)
(72) Inventor: NIJS, Guido, 3680 Neeroeteren (BE)
(74) Representative: Arnold & Siedsma

(56) References cited:
- EP-A1- 3 805 649
- FR-A1- 2 244 142
- GB-A- 2 265 211

## Description

The invention relates to a method for forming a construction panel to create a heated floor or wall.

Building a floor or wall with one or more construction panels is labour-intensive. Construction panels are traditionally formed from stone, clay, concrete or similar materials. On the one hand, the advantage of these materials is that they are extremely strong but the disadvantage is that their natural weight is high. The high natural weight has the disadvantage that construction panels are difficult to transport. Construction panels also require much physical work while they are being arranged, and this can lead to injuries to the installer. Arranging a floor or wall comprising a layer of heating has the additional disadvantage that such floors are complex to construct, which means that if it is arranged by an installer, it takes up a significant amount of time on the one hand and, in addition, is also susceptible to processing and quality errors. EP3805649 describes an example of such a construction panel.

One of the aims of the invention is to provide a method that simplifies and raises the quality of the manufacturing process of a construction panel, wherein the installer of the construction panel is protected from manufacturing defects and injuries.

To this end, the invention provides a method for forming a construction panel according to claim 1. This method comprises a preparation phase and a finishing phase. The preparation phase comprises the following steps:
- providing a base plate;
- connecting an edge profile with the peripheral edges of the base plate, wherein the edge profile has a base with a first leg extending upwards from the base and is connected to the peripheral edge of the base layer on its first side and wherein a gutter is formed between the base and the first leg on the second side, and wherein the edge profile further has a second leg that extends upwards from the base and is at a distance from the first leg, wherein the second leg is fitted with a flange that extends from the second leg to the first leg;
- applying a first layer to the base plate;
- arranging an intermediate plate on the first layer at a distance from the edge profile;
- arranging a heating layer on the intermediate plate;
- fixing the heating layer on the intermediate plate;
- arranging the construction panel in a construction. The finishing phase comprises the following steps.
- applying a second layer to the heating layer and intermediate plate.

Several benefits are achieved by manufacturing the construction panel in a preparation phase and a finishing phase. A first advantage is that the construction panel that is partly finished after the preparation phase is noticeably lighter than commonly used construction panels. This makes it simpler to transport, handle and install the construction panels. Such lightweight construction panels also reduce the physical work required to install the construction panels and, in addition, make it possible to install them faster. The lightweight construction panels are also less likely to result in work injuries while they are being arranged in the floor or wall. Another advantage of the method is based on the insight that the second layer forms a whole, while it is being arranged during the finishing phase. This whole results in an improved homogeneous heat mass, which increases the comfort for the end user. This advantage is further emphasised when several construction panels are arranged side by side. The second layer will combine the multiple construction panels together as a whole. The advantage of this is based further on the insight that when arranging commonly used construction panels, their interconnection is susceptible to cracks between adjacent construction panels. Such cracks make it possible for water to infiltrate or can expose underlying cables. By only applying the second layer in the finishing phase, the final finished floating floor or wall forms a homogeneous heat mass that is free of cracks, wherein mutual heat conduction between different construction panels is almost unhindered and wherein, in addition, the floor or wall also displays an increased strength load capacity.

Furthermore, the method preferably comprises arranging a fibre-reinforced netting between the intermediate plate and the heating layer in the preparation phase. The fibre-reinforced netting guards against contact between the intermediate plate and the heating layer. Direct contact between the intermediate plate and the heating layer is detrimental to the life expectancy of the floor or plate. Another advantage of arranging the fibre-reinforced netting is based the insight that, in a situation wherein the heating layer is applied directly to the intermediate plate, the thermal energy released downwards to the intermediate plate is dissipated in the intermediate plate. This energy is lost in other words. By contrast, the fibre-reinforced netting captures heat radiated downwards by the heating layer and, through its thermal conductivity, once again distributes the captured heat through the second casting layer. In this way, the fibre-reinforced netting improves the thermal heat balance of the final finished construction panel.

Furthermore, the method preferably comprises arranging a fibre-reinforced netting above the heating layer.

Furthermore, the method preferably comprises penetrating the second layer at least partially under the heating layer while the second layer is being applied. In other words, the second layer fills up the construction panel. The thermal conductivity of the construction panel is further improved in this way.

Furthermore, during the preparation phase, the method preferably comprises arranging of a further construction panel with the edge profile adjacent to the construction panel so that a gutter is formed between the construction panels and arranging of the second layer in the gutter.

Furthermore, the method preferably comprises aligning the construction panels by applying an alignment element. This simplifies arranging the construction panels so that the floor or wall can be assembled, aligned and finished more rapidly.

Furthermore, the method preferably comprises positioning a cable of the heating layer in the gutter before applying the second layer.

Furthermore, the method preferably comprises connecting a downholder above the cable at a distance from an upper edge of the edge profile. The distance is preferably at least 2 cm, preferably at least 3 cm. In this way it is virtually guaranteed that the cables and heating layer will not be exposed. The final finished floor or wall is therefore safer in use. In an example wherein the distance is 3.5 cm for instance, the finished floor can be covered again even during renovation work without creating a dangerous situation for the cable and the end user.

Furthermore, the method preferably comprises adding an additive to the second layer, which additive increases the thermal conductivity of the second layer.

Furthermore, the method preferably comprises applying an expansion compensation layer at the edge profile during the preparation phase. The expansion compensation layer compensates thermal expansion of the finished construction panels.

According to a further aspect of the invention, a construction panel is provided to build a floor or wall according to claim 12. This construction panel comprises multiple layers, and wherein the multiple layers comprise the following, from the back to the front of the construction panel:
- a base plate;
- a first layer;
- an intermediate plate;
- a fibre-reinforced netting;
- a heating layer; and
- a second layer;
wherein the layers are at least partially framed by an edge profile, and wherein the fibre-reinforced netting is fitted to prevent contact between the intermediate plate and the heating layer.

The above-mentioned advantages regarding the method can be applied to the construction panel, *mutatis mutandis.*

Furthermore, it is preferable that a fibre-reinforced netting is provided on the heating layer. According to the invention, the edge profile has a base that is provided with a first leg extending upwards from the base with its first side connected to the peripheral edge of the base layer, and wherein a gutter on the second side is formed between the base and the first leg.

Furthermore, the edge profile has a second leg that extends upwards from the base and is at a distance from the first leg, wherein the second leg is fitted with a flange which, in a lying position, extends from the second leg to the first leg, wherein, preferably, the flange extends further in a direction away from the first leg so that the flange and the base form a trench of which the opening is oriented away from the first leg.

The invention will now be further described with reference to an exemplary embodiment shown in the drawing.

In the drawing:
Figure 1 provides a cross-section of a construction panel formed according to an embodiment of the invention.
Figure 2 provides a cross-section of a connection between two construction panels according to an embodiment of the invention.

In the drawing, the same reference number refers to the same or an analogous element.

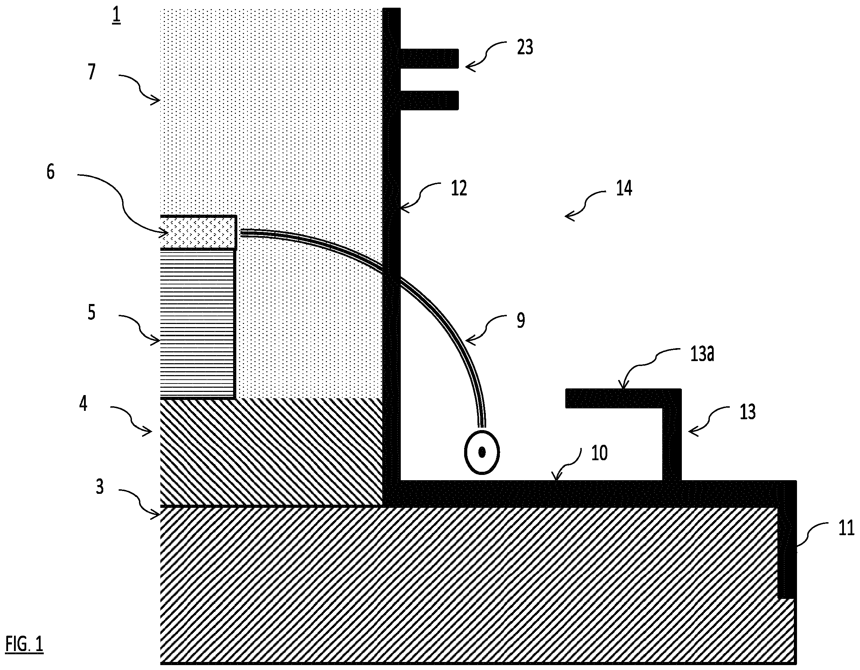

Figure 1 shows a cross-section of an edge of a construction panel 1. Construction panel 1 has an edge profile 2, which forms the peripheral edges of construction panel 1. The edge profile 2 is positioned on and against the base layer 3. Figure 1 shows the edge profile 2 fitted against the peripheral wall of the base layer 3. The base layer 3 is formed by a base plate (e.g. glass fibre reinforced plastic (GRP reinforced) magnesium oxide plate, GRP reinforced foam glass plate, GRP reinforced aluminium silicate plate, cement plate, plaster fibre plate, etc.). The base plate 3 can be manufactured from any type of usable material, such as metal, wood, glass fibre, magnesium oxide, etc. The base plate 3 is preferably rectangular, the length and width of which mainly determine the dimensions of the construction panel 1. The scale-up of the panel dimensions is determined by a fixed multiplier to limit the surface area of the unheated edge strips.

The edge profile 2 (e.g. glass fibre reinforced plastic, cement, carbon, polyvinyl chloride (PVC), Polyamide (PA), polyethylene (PE), polyvinylidene difluoride (PVDF), etc.) has an edge profile base 10, which is laid on the base plate 3. According to the invention, the edge profile 2 comprises the first leg 11, which extends downwards on the peripheral side of the edge profile 2, the edge profile can in this way be easily arranged against the edge of the base plate 3. The edge profile 2 is connected to the base plate 3 in the preparation phase. The edge profile base 10 is preferably glued to the base plate 3. Alternatively or additionally, the first leg 11 can be glued to the base plate 3.

The edge profile 2 has a second leg 12, which stretches upwards from the edge profile base 10. When the edge profiles 2 are fitted to all edges of the base plate 3, an inner container, reservoir or space is formed by the base plate 3 and by the second leg 12 of the edge profiles 2. In this, a first casting or glue layer 4 (e.g. 2K glue (2-component glue), 2K-polyurethane resin, 2K-polyester resin, 2K-epoxy resin, etc., all of which may or may not be combined with a filler (e.g. ceramic micro-particles), fibres and/or mixtures of fibres), is applied during the preparation phase.

When the first casting layer 4 is at least partially cured, an intermediate plate 5 is arranged on the first casting layer 4 during the preparation phase. The intermediate plate 5 is arranged at a distance from the second leg 12 of the edge profile 2. When speaking of the distance between the edge and the intermediate plate 5, this horizontal distance between the second leg 12 and the intermediate plate 5 is meant. The distance in the height direction between the edge profile base 10 and the intermediate plate 5 is less relevant because the base plate 3 is located under the edge profile base 10. The intermediate plate can be manufactured from any usable material such as a wood fibre plate, a polystyrene rigid foam plate (XPS), an expanded polystyrene plate (EPS), a polyurethane plate (PUR), a polyisocyanurate plate (PIR), a cork plate, a combined cork/rubber plate, etc. This intermediate plate is preferably made of a heat-insulating and sound-absorbing material to reduce heat loss and contact noise.

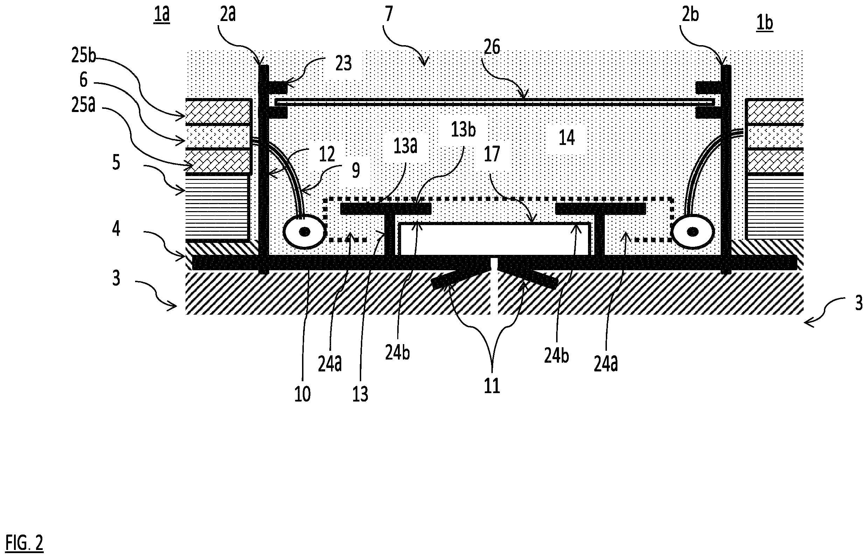

A heating layer 6 is arranged on intermediate plate 5 during the preparation phase. The heating layer 6 is preferably formed by an electric heating element. An electrical heating element preferably comprises an electrical resistance that extends over the surface of the intermediate plate 5. For example, an electrical resistance can be formed if a wire is laid over the surface according to a pattern, for example a zigzag or meandering pattern. Additives such as fibres and/or mixtures of fibres (such as metal, copper, brass, plastic, glass fibre and/or carbon) can be added to facilitate heat distribution and mechanical strength in the heating layer 6 and the casting layers respectively. The heating layer 6 is preferably arranged on a fibre-reinforced netting on the intermediate plate 5, such preferred embodiment is discussed in further detail with regard to figure 2 or can be glued to this by, for example, a 2K glue, 2K polyurethane resin, 2K polyester resin, 2K epoxy resin, etc., all of which may or may not be combined with a filler (e.g. ceramic micro-particles), fibres and/or mixtures of fibres.

Furthermore, the method during the preparation phase preferably comprises applying an expansion compensation layer (not shown) to the edge profile. The expansion compensation layer compensates thermal expansion of the finished construction panels. The expansion compensation layer can be applied to both sides of the second leg 12. For example, the expansion compensation layer can be applied directly opposite the intermediate plate 5.

Because the heating layer 6 is located on intermediate plate 5, which intermediate plate 5 is arranged at a distance from the second leg 12 of the edge profile 2, a space is created between the second leg 12 and the edges of intermediate plate 5 and the heating element 6. During the finishing phase, this space is filled by a second layer 7, which extends up to above the heating layer 6. To limit the weight of the construction panel, the second layer is only applied after the construction panel 2 has been arranged at a location. In practice, this means that the construction panel in a first location is partly finished. The partial finishing of the construction panel in a first location can also be described as the first production phase. The partially finished construction panel is then taken to a final installation location to be arranged there. Arranging the construction panel at a location can also be described as an installation phase. In the finishing phase, the construction panel is then finished by applying the second layer 7 to the heating layer and intermediate plate 5. In this way, a method is provided for forming a construction panel wherein the minimum physical effort is required to move and install the construction panel. In addition, a floor or wall built by means of one or more construction panels forms a more uniform unit because the second layer is formed in one whole unit. The second layer 7 is preferably a casting layer, the casting of the second layer is relatively simple and involves less physical work. The base plate 3 can also be manufactured from a lighter material because the second layer 7 is only applied at a final location. After all, the base plate no longer needs to bear the weight of the second layer 7 while the construction panels are being transported and arranged. This further alleviates the physical work required and accelerates the production of the final floor or wall. The first casting layer 4 and second casting layer 7 together almost fully encapsulate the intermediate plate 5 and the heating layer 6. As a result, the intermediate plate 5 and the heating layer 6 are completely protected from their surrounding area. In a fire situation, it will not be easy for the fire to reach the intermediate plate 5. Even if the intermediate plate 5 and/or the heating layer 6 is sensitive to water and/or moisture, the intermediate plate 5 and the heating layer 6 can easily be protected because they are encapsulated. The second casting layer 7 can be manufactured from any usable material, such as a mixture of different mineral building materials comprising various compositions to increase heat capacity and to improve heat conductivity and mechanical pressure resistance.

It is preferable to provide a reinforcing element (not shown) that extends into the second casting layer 7 and is fed through the second leg 12 of the edge profile 2 into the functional gutter 14 by means of wire anchors. Alternatively and/or additionally, the second leg 12 is distally provided with a thickening, protrusion or raised edge. In practice, both the base plate 3 and the second casting layer 7 have a high compressive strength. In view of the fact that, depending on the selected materials, the tensile strength can be lower, it is advantageous to provide a reinforcement element or a thickening, protrusion or raised edge 23. This prevents the second casting layer 7 from coming loose from the base plate 3, for example when the panel is held upside down. It also increases the tensile strength of the base plate 3 and of the second casting layer 7. The reinforcement element is preferably made of metal. This has the advantage that the reinforcement element will not only increase tensile strength, but also promote heat conduction. The reinforcement element preferably extends through the second leg 12 of the edge profile 2 to the functional gutter 14. The advantage of this is that when the functional gutter is filled, good anchoring occurs between panel 1 and the filling material used to fill the functional gutter. Heat can also be conducted to the functional gutter. A thickening, protrusion or raised edge further increases the strength of the edge profile and the strength of the second leg and, therefore, also the strength of the edge profile. Because of the edge, the top of the second leg can be T-shaped in section or can have the shape of an inverted L in section, wherein the long leg is formed by the second leg and the short leg is formed by the raised edge. As is further explained with regard to figure 2, the protrusion 23 can be provided to attach a downholder to the edge profile 2.

Furthermore, the edge profile 2 also has a third leg 13, which extends upwards, from the edge profile base 10, at a distance from the second leg 12. The third leg 13 preferably does not extend as high as the second leg 12 to allow further components or elements to lie above the third leg 13 without compromising the total height of the construction panel. A heating wire can also be provided on the third leg 13 as illustrated in figure 5. Analogous to the second leg, the third leg can also be distally fitted with a thickening, protrusion or raised edge 13a. A thickening, protrusion or raised edge further increases the strength of the edge profile and the strength of the third leg and, therefore, also the strength of the edge profile. The protrusion of the third leg 13, is preferably a first protrusion 13a. An embodiment wherein the third leg comprises second protrusion 13b is discussed in detail with regard to Figure 2. The first protrusion 13a allows the top of the third leg to form an inverted L, wherein the long leg is formed by the third leg and the short leg is formed by the raised edge. In this way, the third leg forms a trench above the peripheral profile base 10. An opening of the trench is oriented towards second leg 12. The benefits of this are discussed further with regard to Figure 2.

A functional gutter 14 is formed between the second leg 12 and the third leg 13. Cables 9 (e.g. of the heating), sensors and/or home installation/home automation equipment can be accommodated in this functional gutter. For example, a pressure sensor can be fitted in the construction panel while the second layer is applied to detect the presence of one person on the construction panel or finished floor. Figure 1 illustrates how cable 9 runs from the heating layer 6 to the functional gutter 14. An opening can be provided in the second leg 12 for this purpose, so that the cable can run through the second leg of the heating layer 6 to the functional gutter 14. To install the construction panel on site, the cables can also be wound into the gutter so that the gutter acts as a cable reel during transport. The heating layer 6 and/or the intermediate plate 5 are/is preferably fitted with at least 1, more preferably at least 2 temperature sensors. The temperature sensors make it possible to measure the temperature of the plate and/or the surrounding area. By providing two or more sensors, a redundant system is obtained, wherein any poor operation of one sensor is absorbed by the other sensor. The multiple sensors are preferably arranged at a distance from each other in such a way that temperature in different zones of the construction panel 1 can be measured by the different sensors. The specialist will understand that these sensors are also connected via cables or signal wires. Analogous to cable 9 shown, these cables or signal wires run to functional gutter 14.

A sound-absorbing layer (not displayed) is preferably provided under base plate 3 (e.g. rubber, rubber/cork, mineral wool, acoustic decoupling wood fibre board, etc.). The sound-absorbing layer preferably extends upwards beyond the first leg 11. This means that the construction panel 1, when lying flat, rests on the sound-absorbing layer and not on the edge profile 2.

Figure 1 shows the construction panel 1 lying down, wherein the construction panel 1 can be used as a floor. The specialist will understand that, because several casting layers are provided, the state of lying down corresponds to the state in which the construction panel 1 is manufactured. The specialist will also understand that after the construction panel 1 has been manufactured, the construction panel can also be used in other orientations. For example, a wall can be formed by using one or more construction panels 1. The wall has a functional side and a construction side. Because the construction plate 1 comprises a heating element, it will be clear that the functional side of the wall is the side where the heating releases heat. In figure 1, this is the top of the construction panel 1.

Figure 2 shows a cross-section of a connection between two construction panels 1a and 1b. The edges of construction panels 1a and 1b are almost positioned against each other. This means that the edge profiles 2a and 2b of the respective construction panels 1a and 1b lie against each other or, at least, almost against each other. The third leg 13 has a second protrusion 13b at its distal end in the embodiment illustrated. This is why the third leg 13 is T-shaped. As has been described above, the first and second protrusions 13a and 13b form a trench. The grooves formed are respectively called first and second connection trenches 24a and 24b. The first connecting trench 24a, which is formed between the first protrusion 13a and the peripheral profile base 10, has its opening facing the second leg 12. When the first edge profile 1a with its peripheral edge is arranged against the second edge profile 2b, the openings of the corresponding connection grooves 24a are positioned in the opposite direction. When the second casting layer 7 is applied in the finishing phase in functional gutter 14, the material will penetrate into both first connection grooves 24a. When the second casting layer cures, the first construction panel 1a is fully connected to the second construction panel 1b. This integral connection is illustrated by the dotted line in the figure. The dotted line shows that a clamp is formed around the third legs after the casting layer has cured. The material of the casting layer 7 that penetrated under the first projection 13a of the third leg 13, i.e. in the first connecting trench 24a, of the first construction panel forms one whole with the material that penetrated under the first projection 13a of the third leg 13, i.e. the first connecting trench 24a, of the second construction panel 1b. The construction panels connected in this way therefore form an integral and robust unit in the floor or wall. The fact that no clamps are required to interconnect the structural panels makes it easier to install a floor or wall and it can be done more quickly.

Furthermore, Figure 2 shows that the third leg 13b comprises a second protrusion 13b. The second protrusion 13b forms a second connecting trench 24b between the protrusion and the edge profile base 10. It is preferable to provide the second protrusion 13b at a height that corresponds to the dimensions of an alignment profile 17. The alignment profile 17 is a rectangular plate-shaped profile that is easy to manufacture. The alignment profile 17 is arranged in the adjacent second connection grooves 24b. It is preferable that the length of the long leg of the L-profile 17 is almost equal to the distance between the second leg and the third leg of the edge profile 2. This facilitates the fitting of the alignment profile 17. It is preferable to secure the alignment profile 17 with a screw, but it can also be glued. The specialist will understand that the shape of the alignment profile 17 will be different if a raised edge, protrusion or thickening is formed. By providing a raised edge, it is possible to provide holes that extend downwards into the raised edges. A connection plate or alignment profile can be provided on the raised edge with corresponding holes so that the adjacent third legs can be connected to each other by means of screws or bolts.

Alignment elements 17 are arranged at regular distances from each other to interconnect construction panels when building a floor or wall. For this purpose, each construction panel has a third leg with a second protrusion 13b. The second protrusion 13b and the edge profile base form the second connection trench 24b already mentioned. The second connection trench 24b in the third leg of the edge profile is provided to facilitate interconnection. An alignment profile 17 can be provided for this purpose. The alignment profile 17 is a rectangular plate-shaped profile, and such a shape is easy to manufacture from inexpensive and readily available materials. It is preferable to provide the second protrusion 13b at a height that corresponds to the dimensions of an alignment profile 17. This makes it possible to install the first construction panel 1a during the preparation phase. The first end of an alignment profile 17 is then inserted in the second connection trench 24b. The second end, which is opposite the first end, can then be used to align the second construction panel 1b with the first construction panel 1a. In this way, multiple construction panels can be arranged quickly and easily without any significant professional knowledge.

Both in the embodiment shown in Figure 2 and in the embodiment shown in Figure 1, a space 14 is formed on the outside of the edge profile or between two edge profiles. In practice, this space is used to accommodate cables 9 (e.g. heating cable) or other tubes. During the finishing phase and after cables or other pipes have been arranged, this space 14 is filled by the second casting layer which is then applied, for example by pouring a liquid or semi-liquid padding material (e.g. filling concrete or mixture of different mineral building materials comprising different compositions) to increase the heat capacity, improve heat conductivity and mechanical compression resistance. In a special embodiment, the same padding material can also be arranged on top of the construction panel so that the top of an arranged floor or wall has an even appearance without joints or grooves.

Furthermore, Figure 2 shows a fibre-reinforced netting 25a arranged between the intermediate plate 5 and the heating layer 6 before the heating layer 6 is applied. The fibre-reinforced netting 25a guards against contact between the intermediate plate 5 and the heating layer 6. Direct contact between the intermediate plate 5 and the heating layer 6 namely results in so-called thermoelectric creep in due course. Such creep is dangerous because it potentially leads to ignition of the intermediate plate and/or a short circuit. The fibre-reinforced netting 25a is arranged by gluing the netting 25a onto the intermediate plate. The fibre reinforced netting 25 can be glued at regular intervals, for example by applying spots of glue at a regular distance from each other. In this way, adhesive material can be saved and the weight of the construction panel will remain limited. One can also speak of an open structure in this way. The spots of glue can then be pushed flat so that a second layer can be optimally applied to the partially finished construction panels during the finishing phase. Another advantage of the fibre-reinforced netting 25a is based on the understanding that, in a situation in which the heating layer is applied directly to intermediate plate 5, the thermal energy released downwards to intermediate plate 5 is dissipated by the heating layer in intermediate plate 5. This energy is lost in other words. By contrast, the fibre-reinforced netting captures heat radiated downwards by the heating layer and, through its thermal conductivity, once again distributes the captured heat through the second casting layer. In this way, the fibre-reinforced netting improves the thermal heat balance of the final finished construction panel. In order to further improve the heat distribution, the second layer 7 referred to penetrates at least partially under the heating layer 6 while said layer 7 is being applied. Furthermore, it is preferable if a netting 25b that is further fibre-reinforced can be fitted. The fibre-reinforced netting 25a and 25b can also be applied in combination with the above reinforcement.

According to a further preferred embodiment, a cable 9 of the heating layer 6 is positioned in the gutter 14 before applying the second layer 7. Cable 9 will preferably be positioned as close as possible to the edge profile base so that there is a maximum distance between the cable and the top surface of the finished construction panel. In order to guarantee a minimum distance between cables 9 and the top surface of the construction panel, a downholder 26 can be provided while two construction panels 1a, 1b are arranged next to each other. The downholder 26 can be connected to the protrusion 23 provided on the second leg 12 of the edge profile. The protrusion 23 can be made in different ways. For example, one protrusion 23 can be provided on the second leg and this will then act as a stop wherein the height of the downholder is limited by the protrusion. As shown in figure 2, the protrusion 23 can form a connecting groove that is provided to receive the downholder. The protrusion 23 thus limits the freedom of movement of the cables with regard to height to maximise the distance between the top edge of the edge profile 2a and the cables 9. The said distance is preferably at least 2 cm, more preferably at least 3 cm.

It is preferable to provide a finishing layer on the second casting layer 7 and over the edge profiles 2. The finishing layer can be traditional, for example a tile, laminate, parquet, vinyl, epoxy or other commonly used finishing layer. The finishing layer will determine the visual properties of the floor or wall.

Ventilation slots, ducts, lighting cavities and lighting elements can be integrated into the panel where construction panels 1 are made to build a wall. The heating layer in the panels can be controlled collectively or individually to provide local heating. The specific technical structure allows you to saw a panel having certain dimensions to obtain a panel having smaller dimensions, wherein the heating layer remains functional.

The skilled person will appreciate on the basis of the above description that the invention can be embodied in different ways and on the basis of different principles. The invention is not limited here to the above described embodiments. The above described embodiments and the figures are purely illustrative and serve only to increase understanding of the invention. The invention is not therefore limited to the embodiments described herein, but is defined in the claims.

## Claims

1. Method for forming a construction panel (1a, 1b) wherein the method comprises a preparation phase and a finishing phase, wherein the preparation phase comprises the following steps:
- providing a base plate (3);
- connecting an edge profile (2) with the peripheral edges of the base plate, wherein the edge profile has a base (10) with a first leg (12) extending upwards from the base and is connected to the peripheral edge of the base layer on its first side and wherein a gutter is formed between the base and the first leg on the second side and wherein the edge profile further has a second leg (13) that extends upwards from the base and is at a distance from the first leg, wherein the second leg is fitted with a flange (13a) that extends from the second leg to the first leg;
- applying a first layer (4) to the base plate;
- arranging an intermediate plate (5) on the first layer at a distance from the edge profile;
- arranging a heating layer (6) on the intermediate plate,
- fixing the heating layer on the intermediate plate;
- arranging the construction panel in a construction.
wherein the finishing phase comprises the following steps:
- applying a second layer (7) to the heating layer and intermediate plate.

2. Method according to the previous claim, further comprising arranging a fibre-reinforced netting (25a) between the intermediate plate and the heating layer in the preparation phase.

3. Method according to any one of the previous claims, further comprising arranging a fibre-reinforced netting (25b) above the heating layer.

4. Method according to claims 1 and 2, and optionally claim 3, wherein the second layer penetrates at least partially under the heating layer while the second layer is being applied.

5. Method according to any one of the previous claims, further comprising arranging a further construction panel (1b) with the edge profile adjacent to the construction panel so that a gutter is formed between the construction panels and the second layer is applied in the gutter during the preparation phase.

6. Method according to the previous claim, further comprising aligning the construction panels by applying an alignment element.

7. Method according to any one of the claims 5-6, further comprising positioning a cable (9) of the heating layer in the gutter before applying the second layer.

8. Method according to any one of the claims 5-7, further comprising connecting a downholder above the cable at a distance from an upper edge of the edge profile.

9. Method according to the previous claim, wherein the distance is at least 2 cm, preferably at least 3 cm.

10. Method according to any one of the previous Claims, further comprising adding an additive to the second layer, which additive increases the thermal conductivity of the second layer.

11. Method according to the previous claim, further comprising applying an expansion compensation layer at the edge profile during the preparation phase.

12. A construction panel (1a, 1b) for building a floor or wall, wherein the construction panel comprises multiple layers, wherein the multiple layers comprise the following, from the back to the front of the construction panel:
- a base plate (3);
- a first layer (4);
- an intermediate plate (5);
- a fibre-reinforced netting (25a);
- a heating layer (6); and
- a second layer (7);
wherein the construction panel comprises an edge profile, wherein the edge profile has a base (10) with a first leg (12) extending upwards from the base and is connected to the peripheral edge of the base layer on its first side and wherein a gutter is formed between the base and the first leg on the second side and wherein the edge profile further has a second leg (13) that extends upwards from the base and is at a distance from the first leg, wherein the second leg is fitted with a flange (13a) that extends from the second leg to the first leg, and wherein the layers are at least partially framed by the edge profile, and wherein the fibre-reinforced netting is fitted to prevent contact between the intermediate plate and the heating layer.

13. Construction panel according to the previous claim, wherein a further fibre-reinforced netting is provided on the heating layer.

14. Construction panel according to claim 12, wherein the flange extends further in a direction away from the first leg so that the flange and the base form a trench having an opening oriented away from the first leg.

## Patentansprüche

1. Verfahren zum Ausbilden einer Bauplatte (1a, 1b), wobei das Verfahren eine Vorbereitungsphase und eine Endbearbeitungsphase umfasst, wobei die Vorbereitungsphase die folgenden Schritte umfasst:
- Bereitstellen einer Basisplatte (3);
- Verbinden eines Randprofils (2) mit den Umfangsrändern der Basisplatte,
wobei das Randprofil eine Basis (10) mit einem ersten Schenkel (12) aufweist, der sich von der Basis nach oben erstreckt und auf seiner ersten Seite mit dem Umfangsrand der Basisschicht verbunden ist, und wobei zwischen der Basis und dem ersten Schenkel auf der zweiten Seite eine Rinne ausgebildet ist, und wobei das Randprofil ferner einen zweiten Schenkel (13) aufweist, der sich von der Basis nach oben erstreckt und in einem Abstand zu dem ersten Schenkel ist, wobei der zweite Schenkel mit einem Flansch (13a) angebracht ist, der sich von dem zweiten Schenkel zu dem ersten Schenkel erstreckt;
- Auftragen einer ersten Schicht (4) auf die Basisplatte;
- Anordnen einer Zwischenplatte (5) auf der ersten Schicht in einem Abstand von dem Randprofil;
- Anordnen einer Heizschicht (6) auf der Zwischenplatte,
- Befestigen der Heizschicht auf der Zwischenplatte;
- Anordnen der Bauplatte in einer Konstruktion.
wobei die Endbearbeitungsphase die folgenden Schritte umfasst:
- Auftragen einer zweiten Schicht (7) auf die Heizschicht und Zwischenplatte.

2. Verfahren nach dem vorstehenden Anspruch, ferner umfassend das Anordnen eines faserverstärkten Netzes (25a) zwischen der Zwischenplatte und der Heizschicht in der Vorbereitungsphase.

3. Verfahren nach einem der vorstehenden Ansprüche, ferner umfassend das Anordnen eines faserverstärkten Netzes (25b) über der Heizschicht.

4. Verfahren nach den Ansprüchen 1 und 2 und optional 3, wobei die zweite Schicht mindestens teilweise unter die Heizschicht eindringt, während die zweite Schicht aufgetragen wird.

5. Verfahren nach einem der vorstehenden Ansprüche, ferner umfassend das Anordnen einer weiteren Bauplatte (1b) mit dem Randprofil angrenzend an die Bauplatte, so dass zwischen den Bauplatten eine Rinne ausgebildet ist, und die zweite Schicht in der Rinne während der Vorbereitungsphase aufgetragen wird.

6. Verfahren nach dem vorstehenden Anspruch, ferner umfassend ein Ausrichten der Bauplatten durch Auftragen eines Ausrichtungselements.

7. Verfahren nach einem der Ansprüche 5 bis 6, ferner umfassend ein Positionieren eines Kabels (9) der Heizschicht in der Rinne vor dem Auftragen der zweiten Schicht.

8. Verfahren nach einem der Ansprüche 5 bis 7, ferner umfassend ein Verbinden eines Niederhalters über dem Kabel in einem Abstand von einem oberen Rand des Randprofils.

9. Verfahren nach dem vorstehenden Anspruch, wobei der Abstand mindestens 2 cm, vorzugsweise mindestens 3 cm beträgt.

10. Verfahren nach einem der vorstehenden Ansprüche, ferner umfassend ein Hinzufügen eines Additivs zu der zweiten Schicht, wobei das Additiv die Wärmeleitfähigkeit der zweiten Schicht erhöht.

11. Verfahren nach dem vorstehenden Anspruch, ferner umfassend das Auftragen einer Dehnungsausgleichsschicht an dem Randprofil während der Vorbereitungsphase.

12. Bauplatte (1a, 1b) zum Bauen eines Bodens oder einer Wand, wobei die Bauplatte mehrere Schichten umfasst, wobei die mehreren Schichten von der Rückseite zu der Vorderseite der Bauplatte Folgendes umfassen:
- eine Basisplatte (3);
- eine erste Schicht (4);
- eine Zwischenplatte (5);
- ein faserverstärktes Netz (25a);
- eine Heizschicht (6); und
- eine zweite Schicht (7);
wobei die Bauplatte ein Randprofil umfasst, wobei das Randprofil eine Basis (10) mit einem ersten Schenkel (12) aufweist, der sich von der Basis nach oben erstreckt und auf seiner ersten Seite mit dem Umfangsrand der Basisschicht verbunden ist, und wobei zwischen der Basis und dem ersten Schenkel auf der zweiten Seite eine Rinne ausgebildet ist, und wobei das Randprofil ferner einen zweiten Schenkel (13) aufweist, der sich von der Basis nach oben erstreckt und in einem Abstand zu dem ersten Schenkel ist,
wobei der zweite Schenkel mit einem Flansch (13a) angebracht ist, der sich von dem zweiten Schenkel zu dem ersten Schenkel erstreckt, und
wobei die Schichten mindestens teilweise durch das Randprofil eingerahmt sind und wobei das faserverstärkte Netz angebracht ist, um einen Kontakt zwischen der Zwischenplatte und der Heizschicht zu verhindern.

13. Bauplatte nach dem vorstehenden Anspruch, wobei ein weiteres faserverstärktes Netz auf der Heizschicht bereitgestellt ist.

14. Bauplatte nach Anspruch 12, wobei sich der Flansch ferner in eine Richtung weg von dem ersten Schenkel erstreckt, so dass der Flansch und die Basis einen Graben ausbilden, der eine von dem ersten Schenkel weg gerichtete Öffnung aufweist.

## Revendications

1. Procédé de formation d'un panneau de construction (1a, 1b) dans lequel le procédé comprend une phase de préparation et une phase de finition, dans lequel la phase de préparation comprend les étapes suivantes :
- la fourniture d'une plaque de base (3) ;
- le raccordement d'un profil de bord (2) avec les bords périphériques de la plaque de base,
dans lequel le profil de bord a une base (10) avec une première patte (12) s'étendant vers le haut à partir de la base et est raccordé au bord périphérique de la couche de base sur son premier côté et dans lequel une gouttière est formée entre la base et la première patte sur le second côté et dans lequel le profil de bord a en outre une seconde patte (13) qui s'étend vers le haut à partir de la base et est à une certaine distance de la première patte, dans lequel la seconde patte intègre une bride (13a) qui s'étend de la seconde patte à la première patte ;
- l'application d'une première couche (4) sur la plaque de base ;
- l'agencement d'une plaque intermédiaire (5) sur la première couche à une certaine distance du profil de bord ;
- l'agencement d'une couche chauffante (6) sur la plaque intermédiaire,
- la fixation de la couche chauffante sur la plaque intermédiaire ;
- l'agencement du panneau de construction dans une construction.
dans lequel la phase de finition comprend les étapes suivantes :
- l'application d'une seconde couche (7) sur la couche chauffante et la plaque intermédiaire.

2. Procédé selon la revendication précédente, comprenant en outre l'agencement d'un filet renforcé de fibres (25a) entre la plaque intermédiaire et la couche chauffante dans la phase de préparation.

3. Procédé selon l'une quelconque des revendications précédentes, comprenant en outre l'agencement d'un filet renforcé de fibres (25b) au-dessus de la couche chauffante.

4. Procédé selon les revendications 1 et 2, et éventuellement la revendication 3, dans lequel la seconde couche pénètre au moins partiellement au-dessous de la couche chauffante tandis que la seconde couche est en cours d'application.

5. Procédé selon l'une quelconque des revendications précédentes, comprenant en outre l'agencement d'un autre panneau de construction (1b) avec le profil de bord adjacent au panneau de construction de sorte qu'une gouttière est formée entre les panneaux de construction et la seconde couche est appliquée dans la gouttière pendant la phase de préparation.

6. Procédé selon la revendication précédente, comprenant en outre l'alignement des panneaux de construction par l'application d'un élément d'alignement.

7. Procédé selon l'une quelconque des revendications 5 à 6, comprenant en outre le positionnement d'un câble (9) de la couche chauffante dans la gouttière avant l'application de la seconde couche.

8. Procédé selon l'une quelconque des revendications 5 à 7, comprenant en outre le raccordement d'un serre-flan au-dessus du câble à une certaine distance d'un bord supérieur du profil de bord.

9. Procédé selon la revendication précédente, dans lequel la distance est d'au moins 2 cm, de préférence d'au moins 3 cm.

10. Procédé selon l'une quelconque des revendications précédentes, comprenant en outre l'ajout d'un additif à la seconde couche, lequel additif augmente la conductivité thermique de la seconde couche.

11. Procédé selon la revendication précédente, comprenant en outre l'application d'une couche de compensation d'expansion au niveau du profil de bord pendant la phase de préparation.

12. Panneau de construction (1a, 1b) pour la confection d'un plancher ou d'un mur, dans lequel le panneau de construction comprend de multiples couches, dans lequel les multiples couches comprennent les éléments suivants, de l'arrière vers l'avant du panneau de construction :
- une plaque de base (3) ;
- une première couche (4) ;
- une plaque intermédiaire (5) ;
- un filet renforcé de fibres (25a) ;
- une couche chauffante (6) ; et
- une seconde couche (7) ;
dans lequel le panneau de construction comprend un profil de bord, dans lequel le profil de bord a une base (10) avec une première patte (12) s'étendant vers le haut à partir de la base et est raccordé au bord périphérique de la couche de base sur son premier côté et dans lequel une gouttière est formée entre la base et la première patte sur le second côté et dans lequel le profil de bord a en outre une seconde patte (13) qui s'étend vers le haut à partir de la base et est à une certaine distance de la première patte,
dans lequel la seconde patte intègre une bride (13a) qui s'étend de la seconde patte à la première patte, et
dans lequel les couches sont au moins partiellement encadrées par le profil de bord, et dans lequel le filet renforcé de fibres est intégré pour empêcher tout contact entre la plaque intermédiaire et la couche chauffante.

13. Panneau de construction selon la revendication précédente, dans lequel un autre filet renforcé de fibres est placé sur la couche chauffante.

14. Panneau de construction selon la revendication 12, dans lequel la bride s'étend en outre dans une direction à l'opposé de la première patte de sorte que la bride et la base forment une tranchée ayant une ouverture orientée à l'opposé de la première patte.
